Europäisches Patentamt

European Patent Office

Office européen des brevets

(19)

(11) **EP 1 357 498 A2**

(12) **EUROPEAN PATENT APPLICATION**

(43) Date of publication:
**29.10.2003 Bulletin 2003/44**

(51) Int Cl.⁷: **G06F 17/60**

(21) Application number: **02018911.4**

(22) Date of filing: **23.08.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | • **Koyama, Mitsuo, c/o Hitachi, Ltd. I.P.G. Tokyo 100-8220 (JP)**<br>• **Nakamura, Yuichi, c/o Hitachi, Ltd. I.P.G. Tokyo 100-8220 (JP)**<br>• **Takahashi, Naoki, c/o Hitachi, Ltd. I.P.G. Tokyo 100-8220 (JP)** |
| (30) Priority: **25.04.2002 JP 2002123395** | (74) Representative: **Strehl Schübel-Hopf & Partner Maximilianstrasse 54 80538 München (DE)** |
| (71) Applicant: **Hitachi, Ltd. Chiyoda-ku, Tokyo 101-8010 (JP)** | |
| (72) Inventors:<br>• **Mitsukuni, Koshichiro, c/o Hitachi, Ltd. I.P.G. Tokyo 100-8220 (JP)** | |

(54) **Stock planning method**

(57) Conventional techniques are associated with some problem on stock and goods delivery depending upon a change in demand. Because of this problem, it is necessary to have a large quantity of stock as safety stock. A stock planning server (100) calculates a quantity of necessary stock by using the demand and supply characteristics of goods and the lead time and planning cycle in a distribution route of the goods supplied from a production management server (200), a transport management server (300) and a sales management server (400).

FIG.1

EP 1 357 498 A2

**Description**

BACKGROUND OF THE INVENTION

The present invention relates to a technique of stock management of goods, and more particularly to simulation techniques of calculating target values of necessary stocks of inventory suitable for efficiently performing production and transport.

As a conventional technique of stock management of goods, the technique disclosed in the Publication JP-A-8-235274 is known. This conventional technique utilizes both a "manufacturing resource planning (MRP) system and a "just-in-time (JIT) system". More specifically, this Publication discloses a stock management system: although the MRP system is incorporated, JIT items can be dealt with; by making stock forecast of JIT items, the adequacy of "signboard (kanban) numbers" and "order quantities" can be verified; and by shortening a renewal time of stock standard values ("signboard numbers" and "order quantities"), the renewal cycle can be shortened so that supply activities following a market change can be made.

SUMMARY OF THE INVENTION

The above-described conventional technique is, however, associated with some problem on stock and goods delivery depending upon a change in demand. Because of this problem, it is necessary to have a large quantity of stock as safety stock.

This results from that the conventional technique is a mere aggregation of the "MRP system" and the "JIT system". According to the "MRP" system, production quantities are leveled and an actual stock of inventory is adjusted by a changing demand quantity. From this reason, the "MRP" system tries to reduce an actual stock of inventory by making high precision demand forecast. However, if the precision of demand forecast is not high, an excessive or insufficient stock of inventory becomes actual. Simulation of a target value has been difficult conventionally to be performed at a high precision.

According to the "JIT" system, actual stocks of inventory are leveled and production quantities are adjusted by a changing demand quantity. Since the "JIT" system does not require to have a safety stock for a demand change, if the precision of signboard size is poor, there occur lacking items and delivery delay.

Since the above-described conventional technique is a mere aggregation of the "MRP" system and the "JIT" system, the problems of an excessive or insufficient stock, lacking items and delivery delay cannot be solved at the same time.

The above-described problems can be solved if the target value of a proper stock quantity can be calculated. Target values more suitable for actual states can be calculated by performing simulation under various conditions.

According to the invention, the target value of a quantity of necessary stock during a predetermined period required in a distribution route of goods is calculated from the demand and supply characteristics which are a ratio of a demand quantity moving average during the predetermined period to a standard deviation representative of a variation of the demand quantity. Also in this invention, the target value is simulated by changing the conditions such as the demand quantity moving average. In this invention, the target value may be the number of necessary stock months. The number of necessary stock months is information representative of the stock quantity necessary for sales during the predetermined period.

In this specification, the lead time means a goods delivery period from the goods supplier to the demand side including a sales shop. The planning cycle means the period of stock planning to be periodically performed.

The supply characteristics include a safety stock coefficient or a service factor indicating a probability of no lacking goods.

Other objects, features and advantages of the invention will become apparent from the following description of the embodiments of the invention taken in conjunction with the accompanying drawings.

BRIEF DESCRIPTION OF THE DRAWINGS

Fig. 1 is a diagram showing the structure of a system according to an embodiment of the invention.
Fig. 2 is a flow chart illustrating a process to be executed by the system of the invention.
Fig. 3 is a diagram showing an example of an actual sales DB 410.
Fig. 4 is a diagram showing an example of a stock management DB 420.
Fig. 5 is a diagram showing an example of a past actual sales DB 110.
Fig. 6 is a diagram showing an example of a delivery DB 130.
Fig. 7 is a diagram showing an example of a stock planning table 120.
Fig. 8 is a diagram showing an example of a safety stock coefficient calculation table 150 at a service factor of 95%.

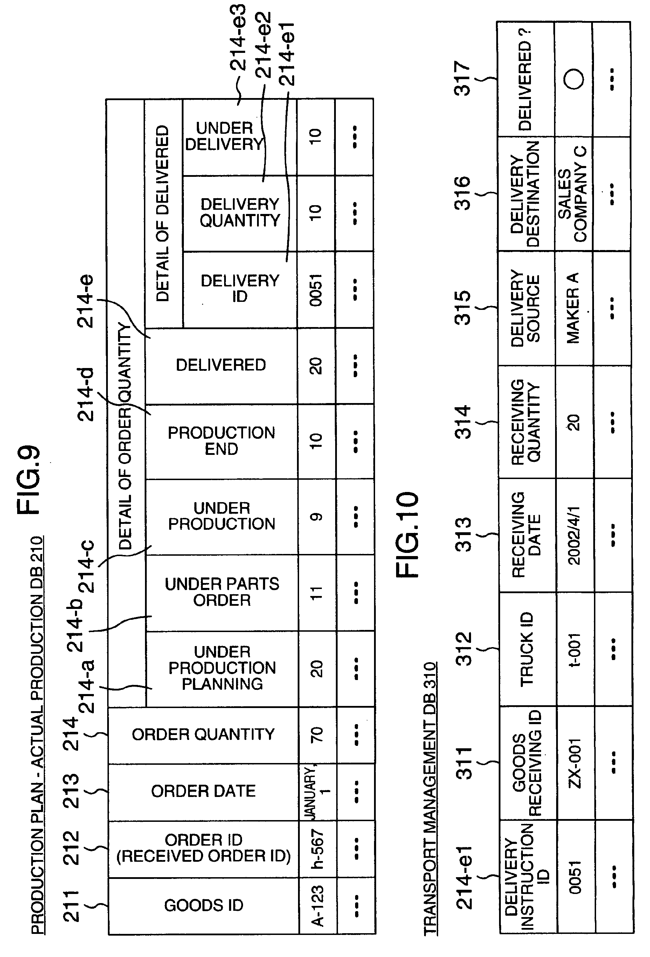

Fig. 9 is a diagram showing an example of a production plan - actual production DB 210.
Fig. 10 is a diagram showing an example of a transport management DB 310.
Fig. 11 is a flow chart illustrating a process to be executed by the system of the embodiment, following the flow chart shown in Fig. 2.
Fig. 12 is a flow chart illustrating a process to be executed by the system of the embodiment, following the flow chart shown in Fig. 11.

## DESCRIPTION OF THE EMBODIMENTS

An application field of the embodiment will be first described. The embodiment is applied to stock planning for the distribution route in which goods manufactured by a maker are transported by a transport means of a transport company to a sales shop to sale the goods. The quantities of effective stocks at a production company, transport company and sales shop are calculated. There may be a plurality of makers, transport companies and sales shops which deal with object goods.

The maker manages its production and grasps its production state by using a production management server 200 to be described later. The transport company manages its transport and its transport state by using a transport management server 300 to be described later. The sales shop manages its sales and its sales state by using a sales management server 400 to be described later.

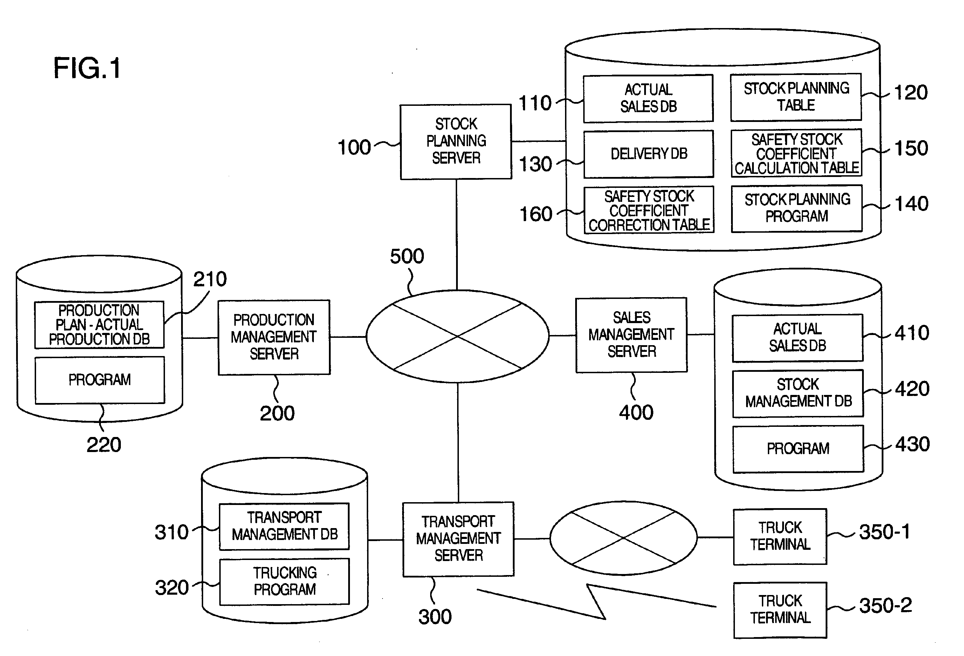

Fig. 1 is a diagram showing the structure of a stock planning system according to the embodiment. The stock planning system has a stock planning server 100, the production management server 200, transport management server 300 and sales management server 400, respectively interconnected by a network 500. A plurality of servers may be used for each of these servers. The numbers of production management servers 200, transport management servers 300 and sales management servers 400 are determined by the topology of a distribution route.

The stock planning server 100 may be integrated with any one of the production management server 200, transport management server 300 and sales management server 400. Each of the stock planning server 100, production management server 200, transport management server 300 and sales management server 400 may be a computer having a general architecture and processes in accordance with a program stored in a storage device.

Truck terminals 350 can be used at a transport means such as a truck and a ship, and may be connected either to the network 500 or another network connected to the transport management server 300. The truck terminal 350 may be a computer having a general architecture and executing processes in accordance with a program stored in a storage device.

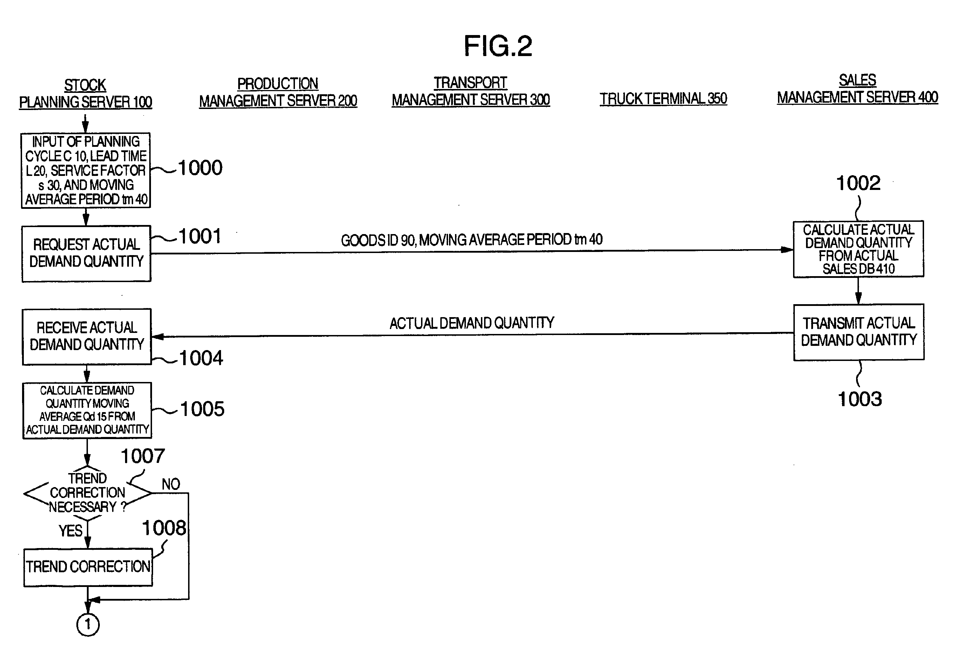

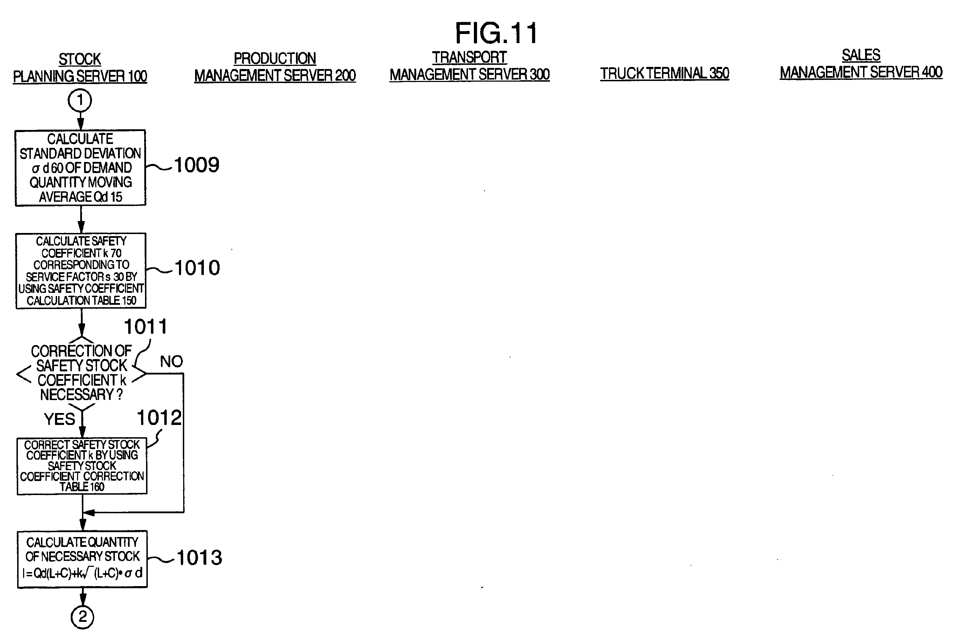

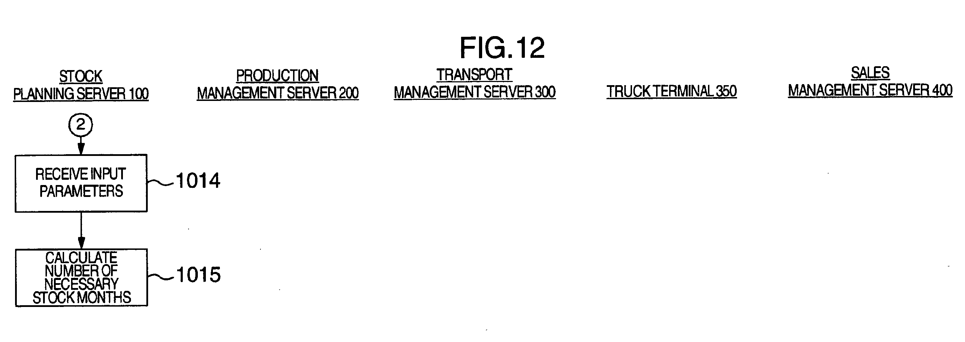

Next, simulation by the stock planning system will be described with reference to the flow charts shown in Figs. 2, 11 and 12.

The stock planning server 100 stores a stock planning table 120. For each cell in the stock planning table 120, the stock planning server 100 receives an input from another server or user at a predetermined timing. Each cell may be calculated from other cells. An example will be described in the following.

First, the stock planning server 100 receives actual demand quantities from the sales management server 400 and calculates a demand quantity moving average Qd 15. A standard deviation d 60 is calculated by using the following equation (1) either by the sales management server 400 or stock planning server 100.

$$\sigma d = \sqrt{(\Sigma(Qd - Qd(i))^2/(tm - 1))} \qquad (1)$$

The stock planning server 100 receives actual sales quantities Qd(i) from the sales management server 400. The stock planning server 100 also receives from the sales management server 400 a quantity of salable goods currently possessed by the sales company and a quantity of goods arrived at the sales company. The sum of the salable goods quantity and arrived goods quantity may by used.

First at Step 1000 a goods ID 90 for identifying goods, a planning cycle C 10, a lead time L 20, a service factor s 30 and a moving average period tm 40 are input to the stock planning server 100. This information is input by a stock manager who is a user of the stock planning server.

This information may correspond to the contents of goods sales strategies made by the stock manager. The planning cycle C 10 has a value satisfying a goods sales plan and representing that "the goods are supplied at what time cycle". The lead time L 20 indicates a time taken for goods to be distributed from the production site to the sales site. The service factor s 30 has a value satisfying the goods sales plan and representing that how many lacking goods are permitted.

As will be later described, the information input at Step 1000 may be manually input, or actual values of distribution may be input as such information.

Next, at Step 1001 the stock planning server 100 requests the actual demand quantity of the goods during a predetermined period from the sales management server 400. For example, the stock planning server 100 transmits request information containing the goods ID 90 and moving average period tm 40 to the sales management server 400.

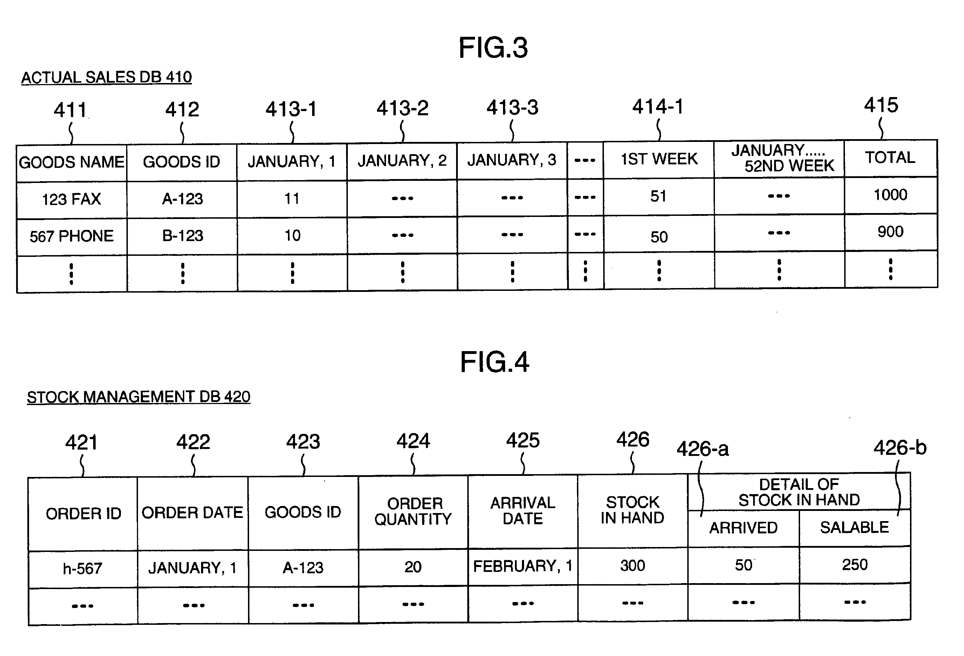

Next, at Step 1002 the sales management server 400 calculates the actual demand quantity corresponding to the transmitted request information. By using the received goods ID 90 as a search key, the sales quantity during the moving average period tm 40 is searched from the actual sales DB 410 shown in Fig. 3 to calculate actual demand quantities.

Next, at Step 1003 the sale management server 400 transmits the calculated actual demand quantities to the stock management server 100.

Next, the stock management server 100 calculates the demand quantity moving average Qd 15 from the actual demand quantities received at Step 1004. The demand quantity moving average Qd 15 is an average of actual demand quantities during predetermined partial moving average periods constituting the moving average period tm 40. For example, if the moving average period tm 40 is one year, the partial moving average period is one week. In this case, the demand quantity moving average Qd 15 is calculated by separating the actual demand quantities into 52 weeks of the year. The demand quantity moving average Qd 15 may be calculated from the following equation (2).

$$Qd = \Sigma(Qd(i))/tm \qquad (2)$$

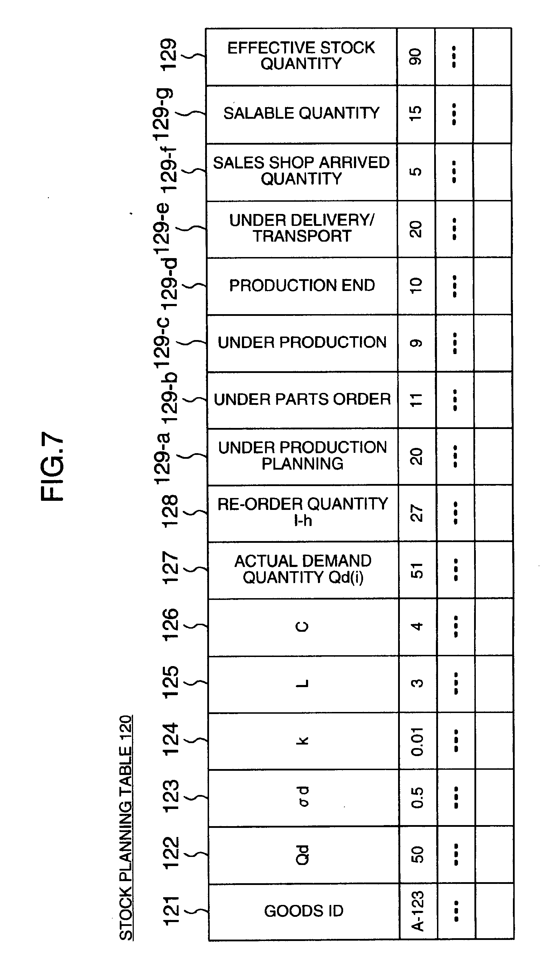

The stock planning server 100 enters the calculated demand quantity moving average Qd 15 in the cell of the column 122 of the stock planning table 120 shown in Fig. 7, the cell corresponding to the goods ID 90.

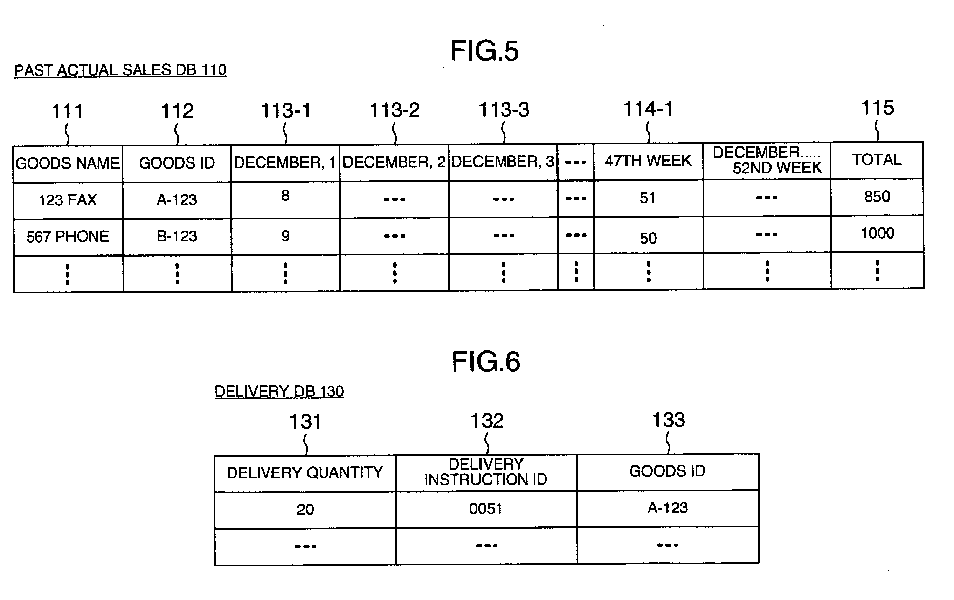

The sales management server 400 may calculate the sales quantity during the latest partial moving average period at Step 1002 and transmit the calculated sales quantity to the stock management server 100 at Step 1003. In this case, the stock planning server 100 calculates the demand quantity moving average Qd 15 by using the received sales quantity and the sales quantities during the partial moving average periods in the past stored in the past actual sales DB 110 shown in Fig. 5.

Step 1005 may be executed at the sales management server 400. Namely, the sales management server 400 calculates the demand quantity moving average Qd 15 and sends it to the stock planning server 100.

Next, at Step 1007 the stock planning server 100 judges whether trend correction is necessary. If necessary, the trend correction is performed at Step 1008 to thereafter advance to Step 1009. The trend correction corrects the demand quantity Qd 15 in accordance with an increase/decrease trend of demands. In the judgement at Step 1007, if the increase/decrease trend is over a predetermined value, then it is judged that the trend correction is necessary. The details of the trend correction will be later described.

Next, at Step 1009 the standard deviation d 60 of the demand quantity moving average Qd 15 is calculated. The standard deviation d 60 may be calculated from the equation (1).

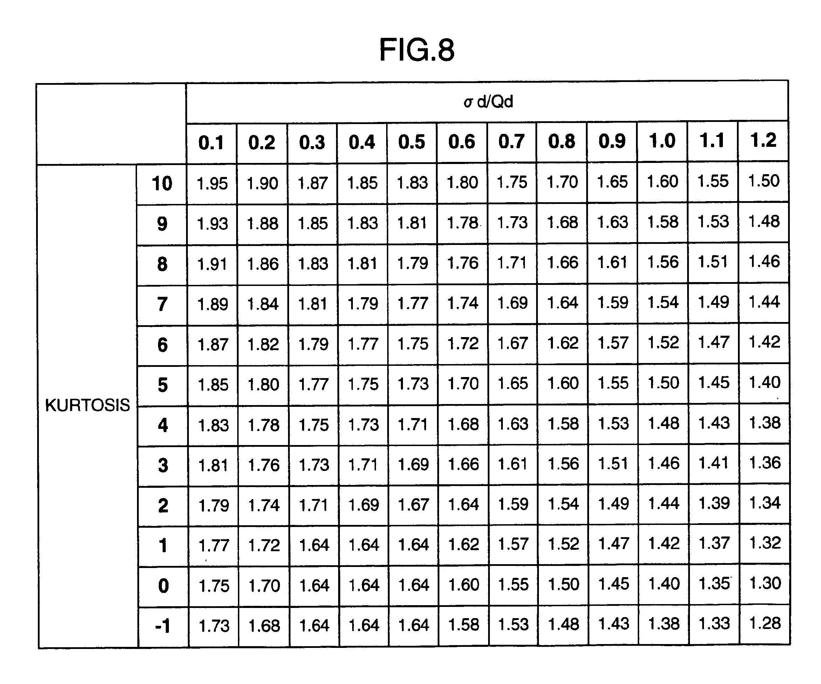

Next, at Step 1010 the stock planning server 100 calculates a safety stock coefficient k 70 from the service factor s 30 by using the safety coefficient calculation table 150 shown in Fig. 8. Namely, the safety stock coefficient k 70 in the safety coefficient calculation table 150 corresponding to the service factor s 30 input at Step 1000 is selected.

For the process at Step 1010 the stock planning server 100 can permit a user to enter a plurality of service factors s to be simulated. For example, service factors s suitable for goods sales strategies can be received so that the necessary number of stock months at each service factor are calculated.

Next, at Step 1011 the stock planning server 100 judges whether the safety stock coefficient k 70 calculated at Step 1010 is necessary to be corrected. If necessary, the correction is made by using a safety stock coefficient correction table 160.

In the judgement at Step 1011, whether the correction is necessary is judged from a distribution of the demand quantity moving average Qd 15. Namely, if at least one of the kurtosis and d/Qd is over predetermined threshold values, it is judged that the correction is necessary. The reason for this is that a quantity of necessary stock is determined on the assumptions that the demand has generally a normal distribution. However, an actual demand distribution is not always a normal distribution, but the skirt may become broader than the normal distribution or the kurtosis becomes higher than the normal distribution. In these cases, the service factor does not match actual demand.

At Step 1012 by using the safety stock coefficient correction table 160 corresponding to the expected service factor s 30, the safety stock coefficient is corrected to be larger for the demand having a higher kurtosis than its threshold value, and corrected to be smaller for the demand having a larger σd(/Qd) than its threshold value.

Next, at Step 1013 the stock planning server 100 calculates a quantity I of necessary stock by using a sum of the planning cycle C 10 and lead time L 20, the demand quantity moving average Qd 15, safety stock coefficient k 70 and standard deviation σd. Namely, the quantity I of necessary stock is calculated from the following equation.

$$I = Qd(L + C) + k\sqrt{(L + C)} \cdot \sigma d \qquad (3)$$

There is a time lag between when a quantity of re-order is calculated and when goods actually arrive at the sales shop. The stock planning server 100 calculates the demand quantity moving average Qd at Steps 1005 to 1008 in accordance with the current stock state. In order to eliminate the time lag, the quantity of necessary stock may be calculated by calculating each demand quantity moving average up to the lead time C 20. Such a demand quantity moving average can be calculated by the following methods: (1) human forecast; (2) utilizing the demand quantity moving average Qd calculated at Steps 1005 to 1008; and (3) computer forecast by the stock planning server 100 or the like. In any of these methods, in accordance with an input demand quantity moving average at each timing, an input value of each item of the stock planning table 120 is calculated and a quantity of necessary stock at each timing is sequentially calculated in accordance with the calculated input values. This calculation is made because each item at the next timing changes with the quantity of necessary stock (requested re-order quantity).

Next, the trend correction at Steps 1007 and 1008 will be described. First, at Step 1007 if the degree of a demand change with time is equal to or greater than the standard, it is judged that the trend correction is necessary. The change degree is calculated in the following manner.

First, the actual demand Qd (i) at each timing is obtained from the item 127 of the stock planning table 120. Next, the actual demand Qd(i) before a predetermined period from each timing is obtained in the similar manner. A difference between the actual demands is calculated and compared with a predetermined value. If the number of differences larger than the predetermined value is larger than a predetermined number, it is judged that the trend correction is necessary. The planning cycle C 10 is included in the period before the predetermined period from each timing. The predetermined value and number may be input from a user to the stock planning server 100.

Next, at Step 1008 the trend correction is executed. First, by using the actual demand recorded in the item 127 of the stock planning table 120, an approximate expression of the demand change during a preset period is obtained. By using this approximate expression, the demand quantity moving average Qd is corrected to obtain a demand quantity moving average at the timing of the lead time C 20. In the above manner, the trend correction is completed.

A quantity 180 of necessary stock is calculated s times, s being input at Step 1000 (or k calculated at Step 1012).

Next, at Step 1013 the stock planning server 100 receives a demand quantity moving average Qd' input by a user. Similar to the service factor s, a plurality of demand quantity moving averages Qd' may be input. A demand quantity moving average Qd' transmitted from another apparatus connected to the network may be received at Step 1013. The other apparatus includes at least one of the production management server 200, transport management server 300, truck terminal 350 and sales management server 400. Qd' satisfying the sales plan by a corresponding sales site may be received from the sales management server 100.

The demand quantity moving average Qd' is an average of demand quantities per a predetermined period unit. The stock planning server 100 may receive a demand quantity of goods, a period during which the demand quantity can be expected, and the unit period of Qd', and perform the following information processing. Calculations are made for obtaining an average per unit period of demand quantities during the period during which the demand quantity can be expected. For example, if a demand of 120 goods during one year can be expected and the unit period is one month, Qd' of 10 is calculated by dividing 120 by 12. In addition to the month unit, the unit period may be a week unit, a year unit, a day unit or the like.

Next, at Step 1014 the number of necessary stock months is calculated by using the calculated quantity of necessary stock 180 and input Qd'. Namely, If calculated quantities I of necessary stock are I(1), I(2) and I(3) and input demand quantity moving averages Qd' are Qd'(1), Qd'(2) and Qd'(3), the numbers of necessary stock months are calculated by the following equations (4).

$$\text{Necessary stock months (1)} = I(1)/Qd'(1)$$

$$\text{Necessary stock months (2)} = I(1)/Qd'(2)$$

$$\text{Necessary stock months (3)} = I(1)/Qd'(3)$$

$$\text{Necessary stock months (4)} = I(2)/Qd'(1)$$

$$\text{Necessary stock months (5)} = I(2)/Qd'(2)$$

$$\text{Necessary stock months (6)} = I(3)/Qd'(3) \qquad (4)$$

As described above, according to the embodiment, necessary stock months can be calculated for various demand and supply characteristics.

In this embodiment, necessary stock months may be displayed in correspondence with the demand characteristics including Qd' and demand quantity and the supply characteristics including the service factor (safety coefficient). For example, the number of necessary stock months may be displayed in each cell of a matrix having the demand quantity as its ordinate and the service factor as its abscissa. This matrix may be used as an input interface. Namely, a matrix whose items are empty is displayed, demand quantities are input to cells of the ordinate of the displayed matrix, and service factors are input to cells of the abscissa. The calculated numbers of necessary stock months are input to corresponding cells having the input values of the ordinate and abscissa. The items of the ordinate and abscissa may be exchanged. The items of the ordinate and abscissa may be other items representative of the demand and supply characteristics.

The embodiment may include the following structure. Simulation may be performed by using parameters including the lead time (L) and planning cycle (C) in addition to the demand characteristics (Qd) and supply characteristics (service factor = safety stock coefficient). In this case, service factor s is not necessarily required to be input as the parameters. In this case, variables constituting the equation (3) $(Qd(L + C) + k\sqrt{(L + C)} \cdot \sigma d)$ are used as the parameters.

According to the invention, target values of stock quantities can be simulated.

It should be further understood by those skilled in the art that although the foregoing description has been made on embodiments of the invention, the invention is not limited thereto and various changes and modifications may be made without departing from the spirit of the invention and the scope of the appended claims.

**Claims**

1. A stock target value calculating method of calculating with a computer a target value of a stock quantity of goods to be distributed on a distribution route, the method comprising:

a step of inputting a planning cycle and a lead time of distribution of the goods;
a step of inputting a first demand quantity moving average during a predetermined period constituting a preset moving average period of distribution of the goods, the first demand quantity moving average being an average of actual demand quantities indicating demand quantities of the goods during the preset moving average period;
a step of calculating a standard deviation of the first demand quantity moving average;
a step of calculating a first safety stock coefficient by using a service factor indicating a probability of no lacking goods;
a step of calculating a quantity of necessary stock of the goods required by the distribution route by using a sum of the planning cycle and the lead time, the first demand quantity moving average, the standard deviation and the first safety stock coefficient; and
a step of calculating the number of necessary months in accordance with the quantity of necessary stock, the number of necessary months corresponding to a second safety stock coefficient input to the computer and a second demand quantity moving average input to the computer.

2. A stock target value calculating method according to claim 1, wherein:

said step of inputting the lead time and the planning cycle inputs a plurality of lead times and a plurality of planning cycles; and
said step of calculating the number of necessary months calculates the number of necessary months corresponding to each of the input lead times and input planning cycles.

3. A stock target value calculating method according to claim 1, wherein said step of calculating the first safety stock coefficient calculates the first safety coefficient by using a safety stock coefficient calculation table (150) indicating a correspondence between safety stock coefficients and service factors and being stored in the computer.

4. A stock target value calculating system for calculating with a computer a target value of a stock quantity of goods to be distributed on a distribution route, the system comprising:

an input apparatus of receiving a planning cycle and a lead time of distribution of the goods entered by a user;
a storage device storing a program for making the stock target value calculating system execute predetermined processes; and
a processing apparatus (100) connected to said input apparatus and said storage device, said processing apparatus executing the predetermined processes in accordance with the program, the predetermined processes including a process of inputting a first demand quantity moving average during a predetermined period constituting a preset moving average period of distribution of the goods, the first demand quantity moving average being an average of actual demand quantities indicating demand quantities of the goods during the preset moving average period, a process of calculating a standard deviation of the first demand quantity moving average, a process of calculating a first safety stock coefficient by using a service factor indicating a probability of no lacking goods, a process of calculating a quantity of necessary stock of the goods required by the distribution route by using a sum of the planning cycle and the lead time, the first demand quantity moving average, the standard deviation and the first safety stock coefficient, and a process of calculating the number of necessary months in accordance with the quantity of necessary stock, the number of necessary months corresponding to a second safety stock coefficient input to the computer and a second demand quantity moving average input to the computer.

5. A stock target value calculating system according to claim 4, wherein:

said input apparatus inputs a plurality of lead times and a plurality of planning cycles; and
said processing apparatus calculates the number of necessary months corresponding to each of the input lead times and input planning cycles.

6. A stock target value calculating system according to claim 4, wherein said processing apparatus calculates the first safety coefficient by using a safety stock coefficient calculation table (150) indicating a correspondence between safety stock coefficients and service factors and being stored in the computer.

**7.** A program (140) capable of being stored in a storage device, the program making a computer execute a stock target value calculating method of calculating a target value of a stock quantity of goods to be distributed on a distribution route, the method comprising:

a step of inputting a planning cycle and a lead time of distribution of the goods;

a step of inputting a first demand quantity moving average during a predetermined period constituting a preset moving average period of distribution of the goods, the first demand quantity moving average being an average of actual demand quantities indicating demand quantities of the goods during the preset moving average period;

a step of calculating a standard deviation of the first demand quantity moving average;

a step of calculating a first safety stock coefficient by using a service factor indicating a probability of no lacking goods;

a step of calculating a quantity of necessary stock of the goods required by the distribution route by using a sum of the planning cycle and the lead time, the first demand quantity moving average, the standard deviation and the first safety stock coefficient; and

a step of calculating the number of necessary months in accordance with the quantity of necessary stock, the number of necessary months corresponding to a second safety stock coefficient input to the computer and a second demand quantity moving average input to the computer.

**8.** A program according to claim 7, wherein:

said step of inputting the lead time and the planning cycle inputs a plurality of lead times and a plurality of planning cycles; and

said step of calculating the number of necessary months calculates the number of necessary months corresponding to each of the input lead times and input planning cycles.

**9.** A program according to claim 7, wherein said step of calculating the first safety stock coefficient calculates the first safety coefficient by using a safety stock coefficient calculation table (150) indicating a correspondence between safety stock coefficients and service factors and being stored in the computer.

# FIG.1

STOCK PLANNING SERVER — 100

- ACTUAL SALES DB — 110
- STOCK PLANNING TABLE — 120
- DELIVERY DB — 130
- SAFETY STOCK COEFFICIENT CALCULATION TABLE — 150
- SAFETY STOCK COEFFICIENT CORRECTION TABLE — 160
- STOCK PLANNING PROGRAM — 140

PRODUCTION MANAGEMENT SERVER — 200

- PRODUCTION PLAN - ACTUAL PRODUCTION DB — 210
- PROGRAM — 220

500

SALES MANAGEMENT SERVER — 400

- ACTUAL SALES DB — 410
- STOCK MANAGEMENT DB — 420
- PROGRAM — 430

TRANSPORT MANAGEMENT SERVER — 300

- TRANSPORT MANAGEMENT DB — 310
- TRUCKING PROGRAM — 320

TRUCK TERMINAL — 350-1

TRUCK TERMINAL — 350-2

EP 1 357 498 A2

# FIG.2

STOCK PLANNING SERVER 100 | PRODUCTION MANAGEMENT SERVER 200 | TRANSPORT MANAGEMENT SERVER 300 | TRUCK TERMINAL 350 | SALES MANAGEMENT SERVER 400

1000 — INPUT OF PLANNING CYCLE c 10, LEAD TIME L 20, SERVICE FACTOR s 30, AND MOVING AVERAGE PERIOD tm 40

1001 — REQUEST ACTUAL DEMAND QUANTITY

GOODS ID 90, MOVING AVERAGE PERIOD tm 40 →

1002 — CALCULATE ACTUAL DEMAND QUANTITY FROM ACTUAL SALES DB 410

1003 — TRANSMIT ACTUAL DEMAND QUANTITY

← ACTUAL DEMAND QUANTITY

1004 — RECEIVE ACTUAL DEMAND QUANTITY

1005 — CALCULATE DEMAND QUANTITY MOVING AVERAGE Qd 15 FROM ACTUAL DEMAND QUANTITY

1007 — TREND CORRECTION NECESSARY ?
NO
YES

1008 — TREND CORRECTION

①

# FIG.3

| GOODS NAME | GOODS ID | JANUARY, 1 | JANUARY, 2 | JANUARY, 3 | --- | 1ST WEEK | JANUARY.....<br>52ND WEEK | TOTAL |
|---|---|---|---|---|---|---|---|---|
| 123 FAX | A-123 | 11 | --- | --- | --- | 51 | --- | 1000 |
| 567 PHONE | B-123 | 10 | --- | --- | --- | 50 | --- | 900 |
| ⋮ | ⋮ | ⋮ | ⋮ | ⋮ | ⋮ | ⋮ | ⋮ | ⋮ |

411 412 413-1 413-2 413-3 414-1 415

# FIG.4

STOCK MANAGEMENT DB 420

| ORDER ID | ORDER DATE | GOODS ID | ORDER QUANTITY | ARRIVAL DATE | STOCK IN HAND | DETAIL OF STOCK IN HAND | |
|---|---|---|---|---|---|---|---|
| | | | | | | ARRIVED | SALABLE |
| h-567 | JANUARY, 1 | A-123 | 20 | FEBRUARY, 1 | 300 | 50 | 250 |
| --- | --- | --- | --- | --- | --- | --- | --- |

421 422 423 424 425 426 426-a 426-b

EP 1 357 498 A2

# FIG.5

PAST ACTUAL SALES DB 110

| GOODS NAME | GOODS ID | DECEMBER, 1 | DECEMBER, 2 | DECEMBER, 3 | ••• | 47TH WEEK | DECEMBER......52ND WEEK | TOTAL |
|---|---|---|---|---|---|---|---|---|
| 123 FAX | A-123 | 8 | ••• | ••• | ••• | 51 | ••• | 850 |
| 567 PHONE | B-123 | 9 | ••• | ••• | ••• | 50 | ••• | 1000 |
| ⋮ | ⋮ | ⋮ | ⋮ | ⋮ | ⋮ | ⋮ | ⋮ | ⋮ |

(111) (112) (113-1) (113-2) (113-3) (114-1) (115)

# FIG.6

DELIVERY DB 130

| DELIVERY QUANTITY | DELIVERY INSTRUCTION ID | GOODS ID |
|---|---|---|
| 20 | 0051 | A-123 |
| ••• | ••• | ••• |

(131) (132) (133)

EP 1 357 498 A2

EP 1 357 498 A2

# FIG.7

STOCK PLANNING TABLE 120

| GOODS ID (121) | Qd (122) | σd (123) | k (124) | L (125) | C (126) | ACTUAL DEMAND QUANTITY Qd(i) (127) | RE-ORDER QUANTITY t-h (128) | UNDER PRODUCTION PLANNING (129-a) | UNDER PARTS ORDER (129-b) | UNDER PRODUCTION (129-c) | PRODUCTION END (129-d) | UNDER DELIVERY/ TRANSPORT (129-e) | SALES SHOP ARRIVED QUANTITY (129-f) | SALABLE QUANTITY (129-g) | EFFECTIVE STOCK QUANTITY (129) |
|---|---|---|---|---|---|---|---|---|---|---|---|---|---|---|---|
| A-123 | 50 | 0.5 | 0.01 | 3 | 4 | 51 | 27 | 20 | 11 | 9 | 10 | 20 | 5 | 15 | 90 |
| ... | ... | ... | ... | ... | ... | ... | ... | ... | ... | ... | ... | ... | ... | ... | ... |
| | | | | | | | | | | | | | | | |

# FIG.8

| | | σ d/Qd | | | | | | | | | | | |
|---|---|---|---|---|---|---|---|---|---|---|---|---|---|
| | | **0.1** | **0.2** | **0.3** | **0.4** | **0.5** | **0.6** | **0.7** | **0.8** | **0.9** | **1.0** | **1.1** | **1.2** |
| | **10** | 1.95 | 1.90 | 1.87 | 1.85 | 1.83 | 1.80 | 1.75 | 1.70 | 1.65 | 1.60 | 1.55 | 1.50 |
| | **9** | 1.93 | 1.88 | 1.85 | 1.83 | 1.81 | 1.78 | 1.73 | 1.68 | 1.63 | 1.58 | 1.53 | 1.48 |
| | **8** | 1.91 | 1.86 | 1.83 | 1.81 | 1.79 | 1.76 | 1.71 | 1.66 | 1.61 | 1.56 | 1.51 | 1.46 |
| | **7** | 1.89 | 1.84 | 1.81 | 1.79 | 1.77 | 1.74 | 1.69 | 1.64 | 1.59 | 1.54 | 1.49 | 1.44 |
| | **6** | 1.87 | 1.82 | 1.79 | 1.77 | 1.75 | 1.72 | 1.67 | 1.62 | 1.57 | 1.52 | 1.47 | 1.42 |
| | **5** | 1.85 | 1.80 | 1.77 | 1.75 | 1.73 | 1.70 | 1.65 | 1.60 | 1.55 | 1.50 | 1.45 | 1.40 |
| **KURTOSIS** | **4** | 1.83 | 1.78 | 1.75 | 1.73 | 1.71 | 1.68 | 1.63 | 1.58 | 1.53 | 1.48 | 1.43 | 1.38 |
| | **3** | 1.81 | 1.76 | 1.73 | 1.71 | 1.69 | 1.66 | 1.61 | 1.56 | 1.51 | 1.46 | 1.41 | 1.36 |
| | **2** | 1.79 | 1.74 | 1.71 | 1.69 | 1.67 | 1.64 | 1.59 | 1.54 | 1.49 | 1.44 | 1.39 | 1.34 |
| | **1** | 1.77 | 1.72 | 1.64 | 1.64 | 1.64 | 1.62 | 1.57 | 1.52 | 1.47 | 1.42 | 1.37 | 1.32 |
| | **0** | 1.75 | 1.70 | 1.64 | 1.64 | 1.64 | 1.60 | 1.55 | 1.50 | 1.45 | 1.40 | 1.35 | 1.30 |
| | **-1** | 1.73 | 1.68 | 1.64 | 1.64 | 1.64 | 1.58 | 1.53 | 1.48 | 1.43 | 1.38 | 1.33 | 1.28 |

EP 1 357 498 A2

PRODUCTION PLAN - ACTUAL PRODUCTION DB 210    FIG.9

| GOODS ID | ORDER ID (RECEIVED ORDER ID) | ORDER DATE | ORDER QUANTITY | DETAIL OF ORDER QUANTITY | | | | | | | |
|---|---|---|---|---|---|---|---|---|---|---|---|
| | | | | UNDER PRODUCTION PLANNING | UNDER PARTS ORDER | UNDER PRODUCTION | PRODUCTION END | DELIVERED | DETAIL OF DELIVERED | | |
| | | | | | | | | | DELIVERY ID | DELIVERY QUANTITY | UNDER DELIVERY |
| A-123 | h-567 | JANUARY, 1 | 70 | 20 | 11 | 9 | 10 | 20 | 0051 | 10 | 10 |
| --- | --- | --- | --- | --- | --- | --- | --- | --- | --- | --- | --- |

211 212 213 214 214-a 214-b 214-c 214-d 214-e 214-e3 214-e2 214-e1

FIG.10

TRANSPORT MANAGEMENT DB 310

| DELIVERY INSTRUCTION ID | GOODS RECEIVING ID | TRUCK ID | RECEIVING DATE | RECEIVING QUANTITY | DELIVERY SOURCE | DELIVERY DESTINATION | DELIVERED ? |
|---|---|---|---|---|---|---|---|
| 0051 | ZX-001 | t-001 | 2002/4/1 | 20 | MAKER A | SALES COMPANY C | ○ |
| --- | --- | --- | --- | --- | --- | --- | --- |

214-e1 311 312 313 314 315 316 317

# FIG.11

| STOCK PLANNING SERVER 100 | PRODUCTION MANAGEMENT SERVER 200 | TRANSPORT MANAGEMENT SERVER 300 | TRUCK TERMINAL 350 | SALES MANAGEMENT SERVER 400 |
|---|---|---|---|---|

① 

CALCULATE STANDARD DEVIATION $\sigma$d 60 OF DEMAND QUANTITY MOVING AVERAGE Qd 15 ~1009

CALCULATE SAFETY COEFFICIENT k 70 CORRESPONDING TO SERVICE FACTOR s 30 BY USING SAFETY COEFFICIENT CALCULATION TABLE 150 ~1010

1011
CORRECTION OF SAFETY STOCK COEFFICIENT k NECESSARY ? — NO

YES

1012
CORRECT SAFETY STOCK COEFFICIENT k BY USING SAFETY STOCK COEFFICIENT CORRECTION TABLE 160

CALCULATE QUANTITY OF NECESSARY STOCK $I = Qd(L+C) + k\sqrt{(L+C)} \cdot \sigma d$ ~1013

②

# FIG.12

EP 1 357 498 A2

| STOCK PLANNING SERVER 100 | PRODUCTION MANAGEMENT SERVER 200 | TRANSPORT MANAGEMENT SERVER 300 | TRUCK TERMINAL 350 | SALES MANAGEMENT SERVER 400 |
|---|---|---|---|---|

(2)

RECEIVE INPUT PARAMETERS ~1014

CALCULATE NUMBER OF NECESSARY STOCK MONTHS ~1015